# EUROPÄISCHE PATENTSCHRIFT

(11) **EP 4 119 214 B1**
(45) Veröffentlichungstag und Bekanntmachung des Hinweises auf die Patenterteilung: **27.03.2024**
(21) Anmeldenummer: 22194635.3
(22) Anmeldetag: 18.01.2018
(51) Int. Cl.: B01D 46/00, B01D 46/44

(54) **VORRICHTUNG ZUR DETEKTION EINER FILTERVERSTOPFUNG**
DEVICE FOR DETECTING FILTER BLOCKAGES
DISPOSITIF DE DÉTECTION D'UNE OBSTRUCTION D'UN FILTRE

(30) Priorität: 30.01.2017 DE 102017101695
(43) Veröffentlichungstag der Anmeldung: 18.01.2023
(62) Teilanmeldung aus: 18700908.9
(73) Patentinhaber: ebm-papst Mulfingen GmbH & Co. KG, 74673 Mulfingen (DE)
(72) Erfinder: WYSTUP, Ralph, 74653 Künzelsau (DE); HUMM, Markus, 74679 Weißbach (DE)
(74) Vertreter: Staeger & Sperling Partnerschaftsgesellschaft mbB

(56) Entgegenhaltungen:
- EP-A1- 2 141 038
- WO-A1-02/19511
- WO-A1-2006/033027
- DE-A1- 4 037 685
- JP-A- H10 160 228
- JP-A- 2015 030 564
- KR-B1- 100 632 148

## Beschreibung

Die Erfindung betrifft eine Vorrichtung zur Detektion und Messung einer Filterverschmutzung.

In lufttechnischen Anlagen werden neben Ventilatoren typischerweise Filter zur Luftreinigung eingesetzt. Bei vielen Geräten kann der Anwender von außen nicht ohne weiteres feststellen ob der Filter bereits so verschmutzt oder mit Schmutzpartikeln zugesetzt ist, dass er gereinigt oder ausgetauscht werden müsste.

Die Feststellung und Messung der Filterverschmutzung wird im Stand z. B. mit zusätzlichen Sensoren oder Einrichtungen durchgeführt, wie z. B. mit einem Infrarotsensor zur Messung der Filterverschmutzung. Mit einem Infrarotfilter wird der Verschmutzungsgrad z. B. in der Weise gemessen, dass eine Infrarotlichtquelle in den Filter hineinstrahlt und auf der gegenüberliegenden Seite durch den dort angebrachten Reflektionsspiegel zurückgeworfen und gemessen wird. Ist der Filter wenig verschmutzt wird viel Licht reflektiert, ist er stark verschmutzt kommt am Messpunkt kaum noch Licht an. Aus dieser Differenz der Strahlungsstärke errechnet die Elektronik den Grad der Verschmutzung. Wird kein Licht mehr reflektiert, schaltet sie z. B. auch die Stromversorgung des Ventilators in dem betroffenen Luftkanal ab.

Eine andere Methode ist die Differenzdruckmessung vor und nach dem Filter, wobei sich der Differenzdruck mit zunehmender Filterverschmutzung messen lässt und daraus Rückschlüsse auf den Grad der Verschmutzung ergeben. Nachteilig ist dabei, dass es zusätzlicher Messeinrichtungen bedarf und sich der Differenzdruck auch auf Grund anderer strömungstechnischer Einflüssen ändern kann.

Aus der DE 4037685 A1 ist eine Filterkontrolleinrichtung für Innenraum-Luftfilter von Kraftfahrzeugen mit einem elektrischen Gebläsemotor mit einem in dessen Ansaugbereich angeordneten Filter bekannt, einer elektronischen Gebläsemotordrehzahlsteuerung. Die Gebläsemotordrehzahlsteuerung und eine Klimaregelungseinheit sind an Ausgängen einer zentralen Steuereinheit angeschlossen, über die mittels eines Steuerprogramms ein automatischer Filterkontrollvorgang durchführbar ist und an deren Eingänge über Analog/Digitalwandler Signalaufbereitungseinrichtungen sowie ein Anlassstrommesser angeschlossen sind. Hierzu sind ebenfalls gesonderte Mess- und Steuerungseinrichtungen notwendig, die es bereits aus Kostengründen zu vermeiden gilt.

Eine weitere Vorrichtung zur Bestimmung eines Filterzustands ist in der WO 02/19511 offenbart.

Der Filterverschmutzungsgrad beeinflusst ferner das erforderliche Drehmoment des Ventilators in einer lufttechnischen Anlage, so dass die Motorparameter permanent verändert werden müssen und der Ventilator auch zunehmend in einem weniger optimalen Betriebsbereich arbeitet.

Der Erfindung liegt deshalb die Aufgabe zugrunde, vorbesagte Nachteile zu überwinden und ein einfaches, kostengünstiges Konzept für die Detektion und/oder Messung einer Filterverschmutzung vorzusehen, welches mit einer geringen Anzahl an Komponenten realisierbar ist.

Diese Aufgabe wird durch die Merkmalskombination gemäß Anspruch 1 gelöst.

In einem geschlossenen Luftströmungskanal oder Raum baut ein Ventilator, wie z. B. ein Radialventilator einen Druck auf ("Druckspeicher"), im Leerlauf kann sich dieser Druck wieder entspannen und wirkt sich so auf das Bremsverhalten des Ventilators aus. Je nach Verschmutzungsgrad und Luftdurchlass des Filters wird der Druck schneller oder langsamer auf- und abgebaut.

Ein Grundgedanke der vorliegenden Erfindung besteht darin, eine Vorrichtung zur Durchführung eines Detektionsverfahrens zum Erkennen einer Filterverschmutzung eines Luftfilters in einem Strömungsbereich eines Ventilators vorzusehen, bei dem der Zusammenhang der Leistungsaufnahme des Ventilators und dessen Ist- Ansteuerungsgrad (PWM-Austeuerung) sowie die Ist-Drehzahl dazu verwendet werden einen Rückschluss auf die Filterverschmutzung zu ziehen.

Die Bestimmung der Leistungsaufnahme des Ventilators kann, sofern eine integrierte Messschaltung zu ungenau arbeitet, durch eine hinterlegte Kennlinie kompensiert und damit präzisiert werden. Hierzu fährt der Ventilator bei seiner Inbetriebnahme mit sauberem Filter seine Ventilator-Kennlinie ab und zeichnet dabei eine ausreichende Anzahl von Ist-Drehzahl und Ist-Aussteuergraden als Wertepaare auf. Das Einmessen einer Kennlinie kann alternativ durch Einspielen einer vorhandenen Kennlinie z.B. über einen Datenbus erfolgen, indem entsprechend für die Einbausituation und die gewählte Filtertype passende Daten aus einer Datenbank verwendet werden.

Erfindungsgemäß wird die Zwischenkreisspannung und der Zwischenkreisstrom erfasst. Diese Daten werden in einem Speicher des Ventilators gespeichert und daraus kann unmittelbar ein Rückschluss auf die Filterverschmutzung gezogen werden.

Ein positiver Nebeneffekt der erfindungsgemäßen Lösung liegt darin, dass der Alterungsprozess des Ventilators verlangsamt wird. Zur Alterung zählt beispielsweise der Verschleiß des Lagers, wofür es heutzutage bereits entsprechende Lebensdauerberechnungsmodelle gibt. Alternativ können auch Lagerlebensdauer bestimmende Parameter mittels entsprechender Sensoren gemessen werden.

Bei der erfindungsgemäßen Lösung vergleicht der Ventilator im laufenden Betrieb die aktuelle Ist-Drehzahl und den Ist-Aussteuergrad mit den entsprechenden gespeicherten Soll-Daten. Erfindungsgemäß findet damit ein Wertepaarvergleich statt. Weicht der zu einem gespeicherten Drehzahlwert entsprechend gespeicherte Aussteuergrad zum aktuellen Ist-Aussteuergrad des aktuellen Ist-Drehzahlwertes weiter als ein vorgegebener zulässiger Abweichungswert ab, wird dieser Zustand als Filterverschmutzung gewertet, da bei einer Filterverschmutzung der Aussteuergrad erhöht werden muss, um zu einer gewünschten Drehzahl zu gelangen, die bei einem nicht oder weniger verschmutztem Filter vorläge.

Mittels Erfassung der Zwischenkreisspannung und des Zwischenkreisstroms, ist es möglich das Verfahren weiter abzusichern und Festzustellen, ob die Abweichung nicht vom Ventilator (z. B. Lagerschaden) oder aus der Ansteuerungsschaltung für den Ventilator stammt. Für den Grad der erlaubten Abweichung wird erfindungsgemäß ein Toleranzband mit Maximalwerten und Minimalwerten definiert.

Die Meldung eines verschmutzten Filters kann als Warnung auf dem Bus, als Blinkcode einer LED oder als gesetztes Fehlermelderelais erfolgen. Das Fehlersignal kann über eine geeignete Schnittstelle auch nach Extern ausgegeben werden.

Ferner wird eine aufwendige und möglicherweise anfällige Sensorik überflüssig, die zudem kostentreibend ist. Die erfindungsgemäße Lösung sieht dagegen lediglich eine Auswerteeinheit vor, in der Zusammenhänge zwischen Drehzahl und Aussteuerungsgrad, sowie noch der Zwischenkreisspannung und dem Zwischenkreisstrom genutzt werden.

Gemäß der Idee der Erfindung kann der Verschmutzungsgrad berechnet werden, wenn die Abweichung der Ist-Werte von den Soll-Werten ein lineares Verhalten aufweist und die absolute Abweichung ermittelt wird. Der so ermittelte Wert kann über einen Datenbus abfragbar sein oder als analoges Spannungssignal an einem Signalausgang anliegen. Bevorzugt würde eine niedrige Spannung als geringe Verschmutzung und eine max. zulässige Spannung des Analogsignals als maximal zulässige Verschmutzung gewertet.

Die zeitdiskrete oder kontinuierliche Erfassung der Werte über die Zeit kann ebenfalls ausgewertet werden und aus der Ableitung nach der Zeit kann auch eine schleichende Veränderung der Filterverschmutzung bis zu einem maximalen zulässigen Verschmutzungsgrad detektiert werden. Ist dabei die erste Ableitung nach der Zeit in etwa konstant, so lässt sich daraus eine kontinuierliche und zunehmende Filterverschmutzung ableiten.

In einer alternativen Ausgestaltung der Erfindung kann vorgesehen sein, die Drehrichtung des Ventilators für eine definierte Zeit umzukehren und dabei werden kontinuierlich der Ist-Aussteuerungsgrad, die Ist-Drehzahl und der Zwischenkreisstrom und die Zwischenkreisspannung aufgezeichnet.

Hierbei wird Änderungsrate des PWM-Signal beim Freiblasen des Filters während des Rückwärtsbetriebs ausgewertet, wobei durch Einbeziehung der spezifischen Parameter des Ventilators der Umstand kompensiert wird, dass Lüfterräder typischerweise auf Vorwärtsdrehrichtung technisch optimiert sind und die Ventilatoren in der Rückwärtsdrehrichtung daher nur eine eingeschränkte Luftperformance erzielen.

Erfindungsgemäß wird in einer weiteren Ausgestaltung ein Drehzahlsprung auf den Ventilator gegeben dessen Sprungantwort aufgezeichnet und ausgewertet wird. Der Filter wirkt dabei wie ein Tiefpass. Die Ausgangskenngrößer hierbei ist das Ist-PWM-Signal. Ist der Filter wenig verschmutzt, klingt es sehr schnell ab, ist der Filter stark verschmutzt klingt es nur langsam ab. Es wird also die Änderungsrate des Ist-PWMs betrachtet. Diese Ausgestaltung ist ähnlich zur vorgenannten Methode des Rückwärtsbetriebs, nur dass keine Kompensation der im Rückwärtsbetrieb schlechteren Luftleistung der Lüfterräder vorgenommen werden muss.

In einer weiteren Ausbildung der Erfindung wird der Filter zusätzlich durch mathematische Parameter in einem Modell beschrieben. Die Sprungantwort liefert Ist-Werte dieser Parameter, die dann mit den idealen Werten aus dem Modell verglichen werden. Solche Filterparameter lassen sich u.a. mittels Kalman-Filter oder anderen Gradienten-Verfahren gewinnen. Es findet hierbei auch eine Auswertung der Tendenz über die Zeit statt.

Eine weitere Ausgestaltung der Erfindung sieht vor, dass durch eine gezielte Modulation des Motorstromes mit einem in Phase und Amplitude bekannten sinusförmigen Trägersignal, der Ventilator mithilfe seiner Flügel als Lautsprecher verwendet werden kann. Es ist die Eigenschaft eines Lautsprechers, dass dieser auch Schwingungen, somit Töne empfangen kann. Die vom Ventilator empfangenen Töne äußern sich wiederum in Änderungen des Motorstromes, insofern dass zu den ausgesendeten Signalen eine Phasenverschiebung und Amplitudenreduktion im Motorstrom auftritt. Ein Filter dämpft nun in Abhängigkeit seiner Verschmutzung diese Ultraschallsignale, so dass das empfangene Signal sowohl in Amplitude als auch in der Phasenlage eine Information über den Verschmutzungsgrad bietet. Die Auswertung der Signale im Strom des Motors des Ventilators kann beispielsweise durch Korrelation des gesendeten mit dem Empfangen Signal erfolgen. Durch eine Variation der Sendefrequenz können dabei auch Störsignale ausgeblendet werden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine schematische Ansicht einer erfindungsgemäßen Vorrichtung und
- Fig. 2: eine schematische Darstellung der Schritte des Detektionsverfahrens.

Im Folgenden wird die Erfindung anhand eines exemplarischen Ausführungsbeispiels beschrieben, wobei gleiche Bezugszeichen auf gleiche strukturelle und/oder funktionale Merkmale hinweisen.

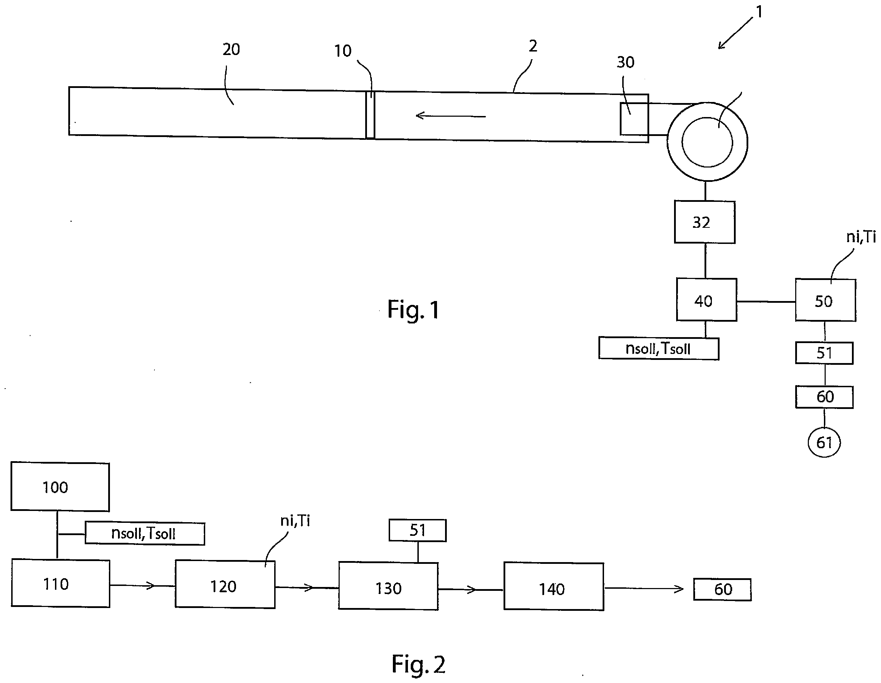

Die Fig. 1 zeigt eine schematische Ansicht eines Ausführungsbeispiels einer Vorrichtung 1 zum Detektieren einer Filterverschmutzung in der Filteranlage 2, wobei die Filteranlage 2 aus wenigstens einem in einer Luftführung 20 installierten Luftfilter 10 und einem elektrisch angesteuerten Ventilator 30 zum Erzeugen eines Luftstroms in der Luftführung 20 besteht. Die Vorrichtung 1 verfügt über eine Motorsteuerung 40 zum Ansteuern des Ventilator-Motors, wobei zur Drehzahlregelung eine PWM-Ansteuerung 32 vorgesehen ist. Ferner ist eine Auswerteeinrichtung 50 zur Ermittlung Ist-Drehzahl nᵢ des Ventilators 30 in Abhängigkeit vom Ist-Aussteuergrades (Tastgrad) des Motorstroms zur Erzielung der aktuellen Drehzahl nᵢ vorgesehen.

In der Auswerteeinrichtung 50 sind ferner Sollwertpaare n_{Soll}, T_{Soll} für die Soll-Drehzahl n_{Soll} der Filteranlage 2 bei einem bestimmten Aussteuergrad T_{Soll} hinterlegt. Darüber hinaus ist in der Vorrichtung ein Komparator 51 vorgesehen, um die jeweiligen Ist-Wertepaare nᵢ, Tᵢ mit den hinterlegten SollWertepaaren n_{Soll}, T_{Soll} zu vergleichen und daraus den Grad der Filterverschmutzung des Luftfilters 10 zu ermitteln. Sobald die Abweichung größer ist wie ein vorgegebener Grenzwert in einem Toleranzband, wird über die Schnittstelle 60 ein Signal an die LED-Leuchte 61 ausgegeben, wie eine unzulässige Filterverschmutzung anzeigt.

In der Fig. 2 ist eine schematische Darstellung der Schritte des Detektionsverfahren zum Ermitteln einer Filterverschmutzung einer Filteranlage gezeigt, welches mit der Vorrichtung 1 nach Fig. 1 durchgeführt werden kann. Bei dem Verfahren sind die folgenden Schritte vorgesehen.

Zunächst erfolgt in einem Schritt 100, das Erfassen oder Einspielen der Motorkennlinie betreffend der Drehzahl in Abhängigkeit vom Aussteuergrad in der Filteranlage 2 bei dem der Luftfilter 10 unverschmutzt ist, so z. B. beim Einfahren der Anlage oder bei einem Filterwechsel.

Diese Werte-Paare werden in dem Schritt 110 als Sollwertepaaren n_{Soll}, T_{Soll} in einem Datenspeicher der Vorrichtung 1 hinterlegt.

Beim Betrieb der Anlage erfolgt in einem Schritt 120 das jeweilige Ermitteln der Ist-Drehzahl nᵢ des Ventilators 30 und des Ist-Aussteuergrades Tᵢ des Motorstroms zur Erzielung der aktuellen Ist-Drehzahl nᵢ.

In einem weiteren Schritt 130 erfolgt ein Vergleich der Ist-Wertepaare nᵢ, Tᵢ mit dem Komparator 51 der Vorrichtung 1 mit den hinterlegten Sollwertepaaren n_{Soll}, T_{Soll}.

Nachfolgend, in dem Schritt 140 erfolgt dann die Bestimmung ob die ermittelte Abweichung der Ist-Wertepaare nᵢ, Tᵢ von den Sollwertepaaren n_{Soll}, T_{Soll} eine maximale vorbestimmte Abweichung übersteigt. Die Abweichung kann dabei als Bandabweichung in einem zulässigen Toleranzband ermittelt werden, wobei entweder die Drehzahl bei einer bestimmten Leistungsaufnahme und damit einem bestimmten Tastgrad zu niedrig ist oder ob ein zu hoher Tastgrad notwendig ist, um eine bestimmte Drehzahl zu erzielen. Insbesondere, wenn die Abweichung der Ist-Werte von den Soll-Werten ein lineares Verhalten über die Zeit aufweist, lässt sich aus der zunehmenden Abweichung nicht nur die aktuelle Filterverstopfung, sondern auch der Zeitpunkt der maximal zulässigen Verschmutzung vorherberechnen, an dem ein Filterwechsel stattfinden sollte.

Insbesondere umfasst die Erfindung folgende Merkmale:
1. Vorrichtung 1 zum Detektieren einer Filterverschmutzung einer Filteranlage bestehend aus wenigstens einem in einer Luftführung 20 installierten Luftfilter 10 und einem elektrisch angesteuerten Ventilator 30 zum Erzeugen eines Luftstroms in der Luftführung 20, wobei die Vorrichtung 1 wenigstens eine Motorsteuerung 40 zum Ansteuern des Ventilator-Motors 31 über eine PWM-Ansteuerung und eine Auswerteeinrichtung 50 umfasst zur Ermittlung Ist-Drehzahl nᵢ des Ventilators 30 in Abhängigkeit vom Ist-Aussteuergrades Tᵢ des Motorstroms zur Erzielung der aktuellen Drehzahl nᵢ, wobei in der Auswerteeinrichtung 50 ferner Sollwertpaare n_{Soll}, T_{Soll} für die Soll-Drehzahl n_{Soll} bei einem bestimmten Aussteuergrad T_{Soll} hinterlegt sind sowie ein Komparator 51, um die Ist-Wertepaare nᵢ, Tᵢ mit den Sollwertepaaren n_{Soll}, T_{Soll} zu vergleichen und daraus den Grad der Filterverschmutzung des Luftfilters 10 zu gewinnen.

Neben der erfindungsgemäßen Vorrichtung wird zur Erläuterung zudem ergänzend folgender Sachverhalt beschrieben.

Detektionsverfahren zum Ermitteln einer Filterverschmutzung einer Filteranlage bestehend aus wenigstens einem in einer Luftführung 20 installierten Luftfilter 10 und einem elektrisch angesteuerten Ventilator 30 zum Erzeugen eines Luftstroms in der Luftführung 20, wobei eine Motorsteuerung (40) und eine Auswerteeinrichtung (50) vorgesehen sind, mit den folgenden Schritten:
a. Ermitteln der Ist-Drehzahl nᵢ des Ventilators 30 und
b. Ermitteln des Ist-Aussteuergrades Tᵢ des Motorstroms zur Erzielung der aktuellen Drehzahl nᵢ und
c. Vergleich der Ist-Wertepaare nᵢ, Tᵢ mit hinterlegten Sollwertepaaren n_{Soll}, T_{Soll} und
d. Bestimmung ob eine Abweichung der Ist-Wertepaare nᵢ, Tᵢ von den Sollwertepaaren n_{Soll}, T_{Soll} eine maximale vorbestimmte Abweichung übersteigt.

Detektionsverfahren mit einer erfindungsgemäßen Vorrichtung nach Merkmal 1, wobei unmittelbar aus der Leistungsaufnahme des Ventilator-Motors 31 ohne Verwendung von Sensoren der Grad der Filterverschmutzung erhalten wird indem die Ist-Leistungsaufnahme mit einer definierten Soll-Leistungsaufnahme der im Vergleich unverschmutzen Filteranlage verglichen wird.

Detektionsverfahren außerdem mit den folgenden Schritten:
a. Ermitteln der Ist-Drehzahl nᵢ des Ventilators 30 und
b. Ermitteln des Ist-Aussteuergrades Tᵢ des Motorstroms zur Erzielung der aktuellen Drehzahl(nᵢ und
c. Vergleich der Ist-Wertepaare nᵢ, Tᵢ mit hinterlegten Sollwertepaaren n_{Soll}, T_{Soll} und
d. Bestimmung ob eine Abweichung der Ist-Wertepaare nᵢ, Tᵢ von den Sollwertepaaren n_{Soll}, T_{Soll} innerhalb oder außerhalb einer maximalen Abweichung liegt.

Wobei die Auswertung des Grades der Filterverschmutzung optional sowohl aus der Leistungsaufnahme des Ventilators und durch eine hinterlegte Ventilator-Kennlinie erfolgt.

Wobei optional ferner die Zwischenkreisspannung und der Zwischenkreisstrom erfasst werden und diese Daten bei der Auswertung des Grades der Filterverschmutzung verwendet werden.

Wobei optional die Meldung eines verschmutzten Luftfilters 30 bei Überschreiten der Abweichung der Ist-Werte von den Soll-Werten als Signal ausgegeben wird.

Wobei optional die Drehrichtung des Ventilators für eine definierte Zeit gegenüber der bestimmungsgemäßen Drehrichtung umgedreht wird und dabei der Ist-Aussteuerungsgrad, die Ist-Drehzahl und der Zwischenkreisstrom und die Zwischenkreisspannung kontinuierlich aufgezeichnet werden.

Wobei optional ein Drehzahlsprung vorzugsweise mittels einer Motorsteuerung beim Ventilator initiiert wird und dessen Sprungantwort aufgezeichnet und ausgewertet wird.

## Patentansprüche

1. Vorrichtung (1) zum Detektieren einer Filterverschmutzung einer Filteranlage bestehend aus wenigstens einem in einer Luftführung (20) installierten Luftfilter (10) und einem elektrisch angesteuerten Ventilator (30) zum Erzeugen eines Luftstroms in der Luftführung (20), wobei die Vorrichtung (1) wenigstens eine Motorsteuerung (40) zum Ansteuern eines Ventilator-Motors (31) über eine PWM-Ansteuerung und eine Auswerteeinrichtung (50) zur Ermittlung einer Ist-Drehzahl (ni) des Ventilators (30) in Abhängigkeit eines Ist-Aussteuergrades (Ti) des Motorstroms zur Erzielung der Ist-Drehzahl (nᵢ) umfasst, wobei in der Auswerteeinrichtung (50) ferner Sollwertpaare (n_{Soll}, T_{Soll}) für eine Soll-Drehzahl (n_{Soll}) bei einem Soll-Aussteuergrad (T_{Soll}) hinterlegt sind sowie ein Komparator (51), der ausgebildet ist, die Ist-Wertepaare (nᵢ, Tᵢ) mit den Sollwertepaaren (n_{Soll}, T_{Soll}) zu vergleichen und daraus sowie aus einer Zwischenkreisspannung und einem Zwischenkreisstrom einen Grad der Filterverschmutzung des Luftfilters (10) zu ermitteln.

2. Vorrichtung nach Anspruch 1, **dadurch gekennzeichnet, dass** ein Mittel vorgesehen ist, um eine Abweichung der Ist-Wertepaare (ni, Ti) von den Sollwertepaaren (n_{Soll}, T_{Soll}) über eine maximale vorbestimmte Abweichung zu bestimmen.

3. Vorrichtung nach Anspruch 1 oder 2, **dadurch gekennzeichnet, dass** ein Mittel zum Erfassung einer Zwischenkreisspannung und eines Zwischenkreisstroms vorgesehen sind.

4. Vorrichtung nach einem der vorhergehenden Ansprüche, **dadurch gekennzeichnet, dass** Mittel vorgesehen sind, um die folgenden Schritte
a. Ermitteln der Ist-Drehzahl (ni) des Ventilators (30) und
b. Ermitteln des Ist-Aussteuergrades (Ti) des Motorstroms zur Erzielung der Ist-Drehzahl (nᵢ) und
c. Vergleich der Ist-Wertepaare (nᵢ, Ti) mit hinterlegten Sollwertepaaren (n_{Soll}, T_{Soll}) und
d. Bestimmung ob eine Abweichung der Ist-Wertepaare (ni, Ti) von den Sollwertepaaren (n_{Soll}, T_{Soll}) innerhalb oder außerhalb der maximalen Abweichung liegt.

5. Vorrichtung nach einem der vorhergehenden Ansprüche, **dadurch gekennzeichnet, dass** Mittel vorgesehen sind, um den Grad der Filterverschmutzung aus der Leistungsaufnahme des Ventilators und durch eine hinterlegte Ventilator-Kennlinie zu ermitteln.

6. Vorrichtung nach einem der vorhergehenden Ansprüche, **dadurch gekennzeichnet, dass** eine Signaleinrichtung vorgesehen ist, die ausgebildet ist die Meldung eines verschmutzten Luftfilters (30) bei Überschreiten der maximalen Abweichung der Ist-Werte von den Soll-Werten als Signal auszugeben.

7. Vorrichtung nach einem der vorhergehenden Ansprüche, **dadurch gekennzeichnet, dass** eine Einrichtung vorgesehen ist, um die Drehrichtung des Ventilators für eine definierte Zeit gegenüber der bestimmungsgemäßen Drehrichtung umzukehren und dabei der Ist-Aussteuerungsgrad, die Ist-Drehzahl und der Zwischenkreisstrom und die Zwischenkreisspannung kontinuierlich aufgezeichnet werden.

8. Vorrichtung nach einem der vorhergehenden Ansprüche, **dadurch gekennzeichnet, dass** ein Drehzahlsprung mittels einer Motorsteuerung beim Ventilator initiiert wird und dessen Sprungantwort aufgezeichnet und ausgewertet wird.

## Claims

1. A device (1) for detecting filter soiling of a filter system consisting of at least an air filter (10) installed in an air duct (20) and an electrically controlled fan (30) for producing an air flow in the air duct (20), wherein the device (1) comprises at least a motor controller (40) for controlling the fan motor (31) by means of PWM control and an evaluating apparatus (50) for determining the actual rotational speed (ni) of the fan (30) in accordance with the actual degree of modulation (Ti) of the motor current for achieving the present rotational speed (ni), wherein, in the evaluating apparatus (50), setpoint value pairs (nₛₑₜₚₒᵢₙₜ, Tₛₑₜₚₒᵢₙₜ) for the setpoint rotational speed (nₛₑₜₚₒᵢₙₜ) at a certain degree of modulation (Tₛₑₜₚₒᵢₙₜ) are also stored, as well as a comparator (51) formed to compare the actual value pairs (ni, Ti) with the setpoint value pairs (nₛₑₜₚₒᵢₙₜ, Tₛₑₜₚₒᵢₙₜ) and to determine therefrom as well as from the interim circuit voltage and the interim circuit current the degree of filter soiling.

2. The device according to claim 1, **characterized in that** a means is provided for determining a deviation of the actual value pairs (ni, Ti) from the setpoint value pairs (nₛₑₜₚₒᵢₙₜ, Tₛₑₜₚₒᵢₙₜ) via a maximum predetermined deviation.

3. The device according to claim 1 or 2, **characterized in that** a means for recording an interim circuit voltage and an interim circuit current is provided.

4. The device according to one of the preceding claims, **characterized in that** means are provided for carrying out the steps of
a. determining the actual rotational speed (ni) of the fan (30), and
b. determining the actual degree of modulation (Ti) of the motor current in order to achieve the current rotational speed (ni), and
c. comparing the actual value pairs (ni, Ti) with stored setpoint value pairs (nsetpoint, Tsetpoint), and
d. determining whether a deviation of the actual value pairs (ni, Ti) from the setpoint value pairs (nsetpoint, Tsetpoint) is within or outside a maximum predefined deviation.

5. The device according to one of the preceding claims, **characterized in that** means are provided for determining the degree of filter soiling takes place both from the power consumption of the fan and by means of a stored fan characteristic curve.

6. The device according to one of the preceding claims, **characterized in that** a signal device is provided formed to output a signal of a soiled air filter (30) when the deviation of the actual values from the setpoint values is exceeded.

7. The device according to one of the preceding claims, **characterized in that** a device is provided for reversing the direction of rotation of the fan for a defined time as compared to the proper rotational direction and, in doing so, the actual degree of modulation, the actual rotational speed, and the intermediate circuit current and the intermediate circuit voltage are continuously recorded.

8. The device according to one of the preceding claims, **characterized in that** a jump in rotational speed is initiated by means of a motor controller with the fan, and its jump response is recorded and evaluated.

## Revendications

1. Dispositif (1) permettant de détecter un encrassement de filtre d'une installation de filtration composée d'au moins un filtre à air (10) installé dans un conduit d'air (20) et d'un ventilateur (30) à pilotage électrique pour générer un flux d'air dans le conduit d'air (20), dans lequel le dispositif (1) comprend au moins une commande de moteur (40) pour piloter un moteur de ventilateur (31) par l'intermédiaire d'un pilotage MIL et un équipement d'évaluation (50) pour établir une vitesse de rotation réelle (ni) du ventilateur (30) en fonction d'un facteur de réglage réel (Ti) du courant de moteur afin d'obtenir la vitesse de rotation réelle (ni), dans lequel en outre des paires de valeurs de consigne (n_{Soll}, T_{Soll}) pour une vitesse de rotation de consigne (n_{Soll}) avec un facteur de réglage de consigne (T_{Soll}) sont mémorisées dans le moyen d'évaluation (50), ainsi qu'un comparateur (51) qui est réalisé pour comparer les paires de valeurs réelles (ni, Ti) avec les paires de valeurs de consigne (n_{Soll}, T_{Soll}) et pour établir un degré d'encrassement de filtre du filtre à air (10) sur cette base ainsi que sur la base d'une tension de circuit intermédiaire et d'un courant de circuit intermédiaire.

2. Dispositif selon la revendication 1, **caractérisé en ce qu'**un moyen est prévu pour déterminer un écart des paires de valeurs réelles (nᵢ, Ti) par rapport aux paires de valeurs de consigne (n_{Soll}, T_{Soll}) au-delà d'un écart prédéterminé maximal.

3. Dispositif selon la revendication 1 ou 2, **caractérisé en ce qu'**un moyen pour détecter une tension de circuit intermédiaire et un courant de circuit intermédiaire est prévu.

4. Dispositif selon l'une quelconque des revendications précédentes, **caractérisé en ce que** des moyens sont prévus pour effectuer les étapes suivantes consistant à
a) établir la vitesse de rotation réelle (ni) du ventilateur (30), et
b) établir le facteur de réglage réel (Ti) du courant de moteur pour obtenir la vitesse de rotation réelle (ni), et
c) comparer les paires de valeurs réelles (ni, Ti) avec des paires de valeurs de consigne (n_{Soll}, T_{Soll}) mémorisées, et
d) déterminer si un écart des paires de valeurs réelles (ni, Ti) par rapport aux paires de valeurs de consigne (n_{Soll}, T_{Soll}) est situé à l'intérieur ou à l'extérieur de l'écart maximal.

5. Dispositif selon l'une quelconque des revendications précédentes, **caractérisé en ce que** des moyens sont prévus pour établir le degré de l'encrassement de filtre sur la base de la puissance absorbée du ventilateur et à l'aide d'une courbe caractéristique de ventilateur mémorisée.

6. Dispositif selon l'une quelconque des revendications précédentes, **caractérisé en ce qu'**un équipement de signalisation est prévu qui est réalisé pour émettre sous forme de signal la notification d'un filtre à air encrassé (30) lorsque l'écart maximal des valeurs réelles par rapport aux valeurs de consigne est dépassé.

7. Dispositif selon l'une quelconque des revendications précédentes, **caractérisé en ce qu'**un équipement est prévu pour inverser le sens de rotation du ventilateur pendant un temps défini par rapport au sens de rotation conforme, et le facteur de réglage réel, la vitesse de rotation réelle et le courant de circuit intermédiaire et la tension de circuit intermédiaire étant alors enregistrés en continu.

8. Dispositif selon l'une quelconque des revendications précédentes, **caractérisé en ce qu'**un saut de vitesse de rotation est initié au niveau du ventilateur au moyen d'une commande de moteur et la réponse indicielle dudit ventilateur est enregistrée et évaluée.
